# EUROPEAN PATENT APPLICATION

(11) **EP 1 958 874 A2**
(43) Date of publication of application: **20.08.2008**
(21) Application number: 08101547.1
(22) Date of filing: 12.02.2008
(51) Int. Cl.: B64D 13/02

(54) **Lightweight composite material and metal thrust recovery flapper valve**

(30) Priority: 15.02.2007 US 675523
(71) Applicant: Honeywell International Inc., Morristown, NJ 07962 (US)
(72) Inventor: Horner, Darrell W., Oro Valley, AZ 85737 (US); Venghaus, Mark R., P.O.Box 22445 Morristown, NJ 07962-2245 (US); Hubbard, Brian D., Rock Point, AZ 86545 (US); Mohabir, Robin R., P.O. Box 22445 Morristown, NJ 07962-2245 (US); Aza, John J., Tucson, AZ 85707 (US); Park, James H., Tucson, AZ 85730 (US)
(74) Representative: Buckley, Guy Julian

(57) **Abstract**

The present invention provides a thrust recovery valve (20) that is less expensive and lighter weight while maintaining required system safety. It utilizes valve doors made partially of plastic material and uses aluminum structure on the outer surface of the door, with a main structure made from fiber reinforced plastic material. The structure of the door is made from injection molded, fiber-reinforced plastic (CP), called the "insert" having complex geometric features including the aerodynamic inner surface, the sculpted hollow inner surfaces for weight savings, and grooves required to hold seals and energizing springs. The "plate" (21), shaped to match the airplane skin contour, provides reinforcing structure on the external surface of the airplane.

## Description

### BACKGROUND OF THE INVENTION

The present invention generally relates to cabin air outflow valves and, more particularly, to cabin pressure thrust recovery valves.

Cabin pressure thrust recovery valves (TRVs) are used on large transport airplanes. These valves are mounted on the fuselage skin and create thrust as a result of mass air flow exhausting through the valve doors. Thrust recovery valves are large and heavy, and quite expensive relative to their butterfly valve equivalent. Butterfly valves generally comprise a cylindrical airflow passage with a rotatable closure plate therein.

U.S. Patent No. 3,544,045 (1970) to Butscher discloses a TRV, also known as a double flapper valve, to provide pressure control for a pressurized cabin of an aircraft. Two flappers are opened/closed by a control linkage to allow cabin air to escape from a port in the aircraft skin during the climb to cruising altitude. Each flapper has a metal skin made of the same material and thickness as the airplane skin. Most airplane skins are made of aluminum. The flapper metal skin is reinforced by a sheet metal backing. Alternatively the flapper metal skin and backing may be cast in an integral unit for ease of fabrication of the all metal flapper. A disadvantage of the aforementioned flapper valve is its relatively heavy weight.

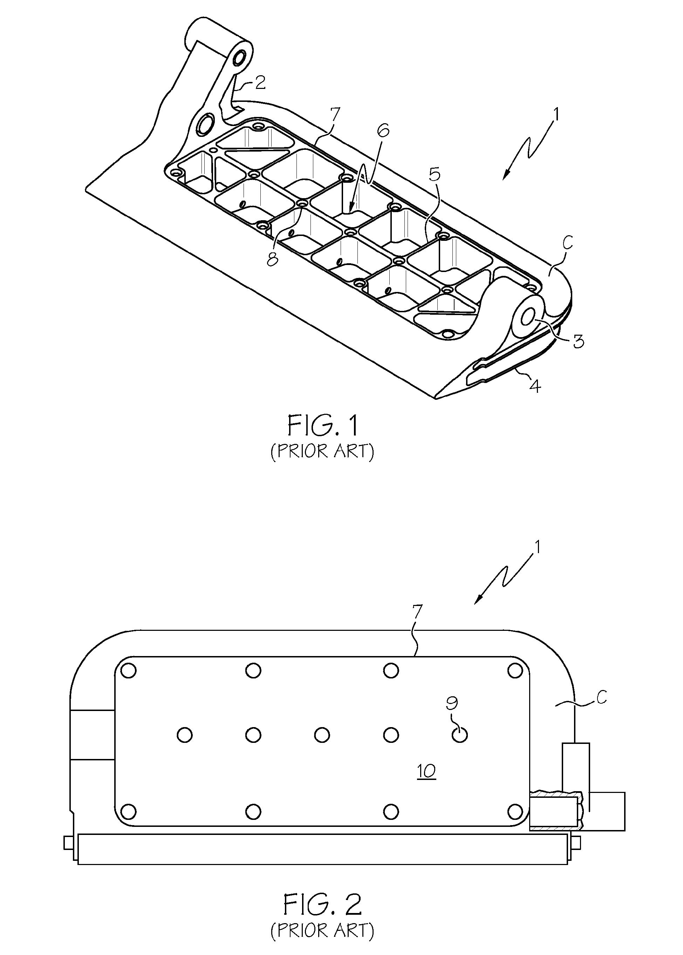

Referring to FIGS. 1 and 2, an all-aluminum prior art flapper valve 1 is generally made by a casting and several machining operations. Bushing arms 2, 3 are solid aluminum. An aircraft skin 4 is part of the casting C. Ribs 5 form hollows 6 which reduce the weight. Holes 8 in the ribs 5 receive fasteners 9 which secure an interior backplate 10 to the casting C. The interior of the casting C contains a recess 7 to receive the backplate 1. All parts are metal and thus have a disadvantage of having a relatively heavy weight.

Recently, there has been a move toward providing butterfly outflow valves that are relatively lightweight for newer generations of lightweight and high altitude capable jet aircraft. Honeywell International Inc. has invented a butterfly outflow valve as disclosed in co-pending U.S. Patent Application Serial No. 11/369344, filed March 6, 2006 titled 'Compact, Lightweight Cabin Pressure Control System Butterfly Outflow Valve with Redundancy Features', wherein the cylindrical body is made of a composite material including fiber-reinforced polyetherimide (PEI), known commercially as Ultem^{™} made by GE. The cylindrical valve body has an inner sleeve made at least partially of a metallic material. A rotatable butterfly plate may be made of PEI.

As can be seen, there is a need for a reduced weight yet safe and strong flat panel TRV type valve that conforms to the skin of a high flying aircraft.

### SUMMARY OF THE INVENTION

In one aspect of the present invention, a thrust recovery valve for an aircraft, the valve comprising a reinforcing backplate made of a single mold of plastic; the reinforcing backplate forming an interior surface and an exterior mounting surface; a metallic skin fastened to the exterior mounting surface; and wherein the metallic skin is exposed to an ambient environment outside the aircraft.

In another aspect of the present invention; a thrust recovery valve comprises a metallic skin; a reinforcing backplate for the metallic skin; the reinforcing backplate made from a single cast mold and comprising a composite material; a bushing arm fastened to an end of the reinforcing backplate and the metallic skin; and the bushing arm made from a metal.

In a further aspect of the present invention, a thrust recovery valve comprises an exterior skin that contacts an ambient environment of an aircraft; a backing plate that supports the exterior skin; a bushing arm fastened to an end of said backing plate and the exterior skin; the backing plate made of a composite material; and wherein the exterior skin covers a union between the bushing arm and the backing plate.

These and other features, aspects and advantages of the present invention will become better understood with reference to the following drawings, description and claims.

### BRIEF DESCRIPTION OF THE DRAWINGS

FIG. 1 is a top perspective view of a prior art all aluminum flapper valve;

FIG. 2 is a top plan view of the flapper valve shown in FIG. 1 with the interior backing plate screwed in place;

FIG. 3 is an exploded view of one embodiment of the present invention;

FIG. 4 is a top perspective view of the assembled embodiment of FIG. 3;

FIG. 5 is a bottom (aircraft interior) plan view of the embodiment of FIG. 3;

FIG. 6 is a side perspective view of the weight reduced bushing arm of FIG. 3.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by appended claims.

Broadly, the present invention provides a TRV that is less expensive and lighter weight than prior art TRVs while still maintaining the required system safety. This invention makes the valve partially out of composite material and partially out of aluminum. This is in contrast to prior art TRVs that are made all of metal or aluminum.

The term "composite material" as used herein is intended to mean a material containing in part a non-metallic substance. Examples of composite materials include fiber-reinforced plastics such as PEI, carbon fiber materials, and other milt-component moldable materials.

In one embodiment, and by way of example only, a thrust recovery flapper valve comprises an assembly of a reduced thickness aluminum skin having about a 1/8 inch thickness as compared to the conventional 1/4 inch thickness. A PEI reinforcement backplate is made of a single injection molded casting with hollowed areas used to form support ribs. Screws fasten the aluminum aircraft skin to the ribs. At each end of the reinforcement backplate and the aluminum skin an all aluminum bushing arm is fastened by screws running into the bushing arm and then running longitudinally relative to the flapper valve. Weight is reduced in the bushing arms by means of machining out the excess and/or using custom molds. The final assembly costs only about 10 percent of prior art valves, and weighs only about ninety percent of prior art valves. The maximum deflection of the present invention is predicted at about 0.054 inch.

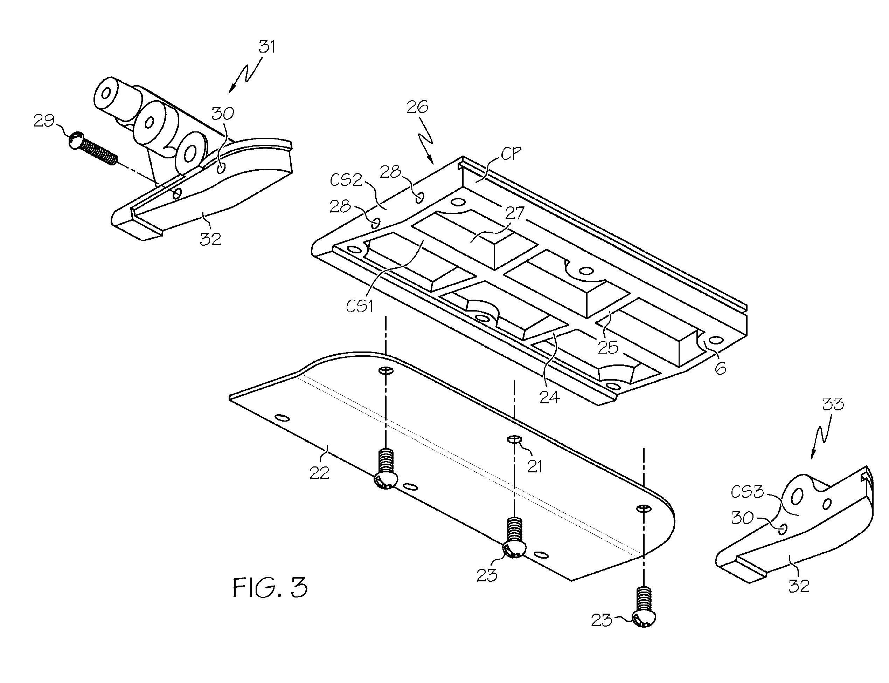

Referring to FIG. 3, a thrust recovery flapper valve 20, such as for an aircraft, can include an aircraft skin surface panel 21 nominally made of aluminum about, for example, 1/8 inch thick. Holes 22 in panel 21 may allow fasteners 23 to secure panel 21 to corresponding holes 24 in ribs 25 of casting CP. An adhesive A can be also used on ribs 25 to strengthen a bond between panel 21 and casting CP. The adhesive A also serves to prevent leakage between the panel 21 and casting CP.

Casting CP may form an interior backplate 26 for flapper valve 20. Casting CP may be nominally made of PEI, for example. Longitudinal ribs 27 in the backplate 26 may have holes 28 for fasteners 29 which may secure a bushing arm 31 via holes 30 to the casting CP. Holes 32 in bushing arms 31 and 33 may receive fasteners 230 to secure the panel 21 to the bushing arm 31. Hollows 6 in casting CP reduce weight while the ribs 25 and 27 provide structural strength.

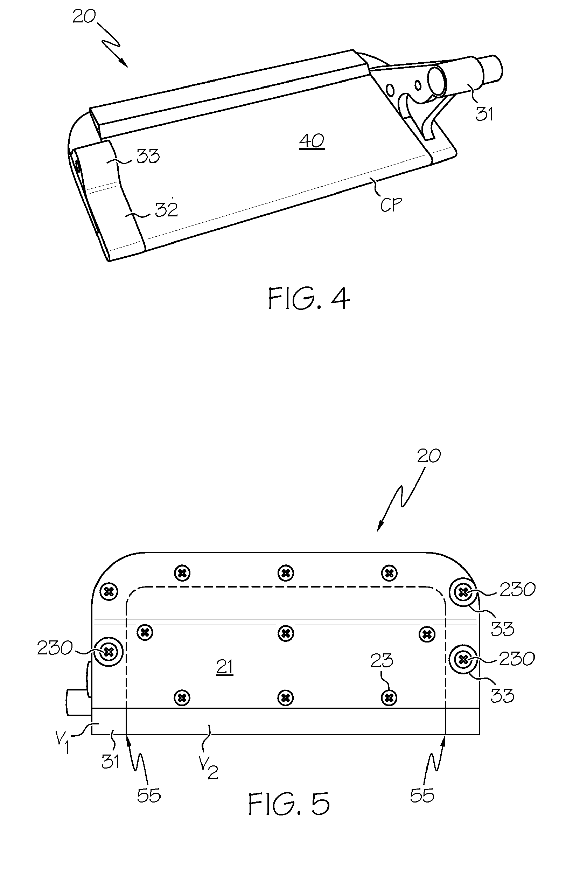

Referring next to FIG. 4 the flapper valve 20 can have an interior surface 40 that is part of the casting CP. Interior surface 40 can be integral to the interior backplate 26.

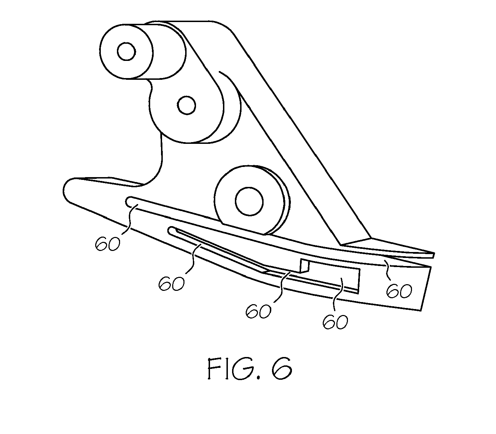

Referring next to FIG. 5, the skin surface panel 21 may be the only portion of the flapper valve 20 which is in direct contact with the aircraft exterior ambient environment. The visible portions V1, V2, V3 of the casting CP and bushing arms 31, 33 may not be in direct contact with the ambient environment of the aircraft. The panel 21 can add structural support to bushing arms 31, 33 via fasteners designated 230. It may be desirable to use adhesive at contact surfaces CS1, CS2, CS3 between the casting CP and components 21, 31, and 33 which can form a rigid assembly for the flapper valve 20. Nominally, fasteners 23, 230 can be aluminum flat head screws. A boundary 55 between the bushing arm 33 and casting CP and between bushing arm 31 and casting CP can be covered by panel 21 where a portion of the boundary 55 is exposed to the ambient environment outside the aircraft.
Referring last to FIG. 6, the bushing arm 31 can have sculpted material removal areas 60 which can eliminate material to reduce weight without sacrificing structural strength.

It should be understood, of course, that the foregoing relates to exemplary embodiments of the invention and that modifications may be made without departing from the spirit and scope of the invention as set forth in the following claims.

## Claims

1. A thrust recovery valve (20) comprising:
a metallic skin (21);
a reinforcing backplate (26) for said metallic skin (21);
said reinforcing backplate (26) made from a single cast mold and comprising a composite material;
a bushing arm (31,33) fastened to an end of said reinforcing backplate (26) and the metallic skin (21); and
said bushing arm (31,33) made from a metal.

2. The valve (20) of Claim 1, wherein said metallic skin (21) covers a boundary segment (55) between the bushing arm (31,33) and the reinforcing backplate (26); and said boundary segment (55) is exposed to an ambient environment.

3. The valve (20) of Claim 1, wherein said composite material further comprises polyetherimide.

4. The valve (20) of Claim 1, wherein said reinforcing backplate (26) further comprises an external mounting surface having ribs (27) and hollows (6).

5. The valve (20) of Claim 1, wherein said metallic skin (21) is attached to the reinforcing backplate (26) with fasteners (23) and an adhesive.

6. The valve (20) of Claim 1, wherein said bushing arm (31,33) is attached to said reinforcing backplate (26) with an adhesive between said bushing arm (31,33) and said reinforcing backplate (26), and with fasteners (230) through said metallic skin (21) and into said bushing arm (31,33).
